# EUROPEAN PATENT SPECIFICATION

(11) **EP 4 410 737 B1**
(45) Date of publication and mention of the grant of the patent: **18.03.2026**
(21) Application number: 22876808.1
(22) Date of filing: 27.09.2022
(51) Int. Cl.: B66F 9/07, B66F 9/075, B65G 1/04

(54) **STOCKER CRANE SYSTEM AND METHOD FOR OPERATING SAME**
LAGERKRANSYSTEM UND VERFAHREN ZUM BETRIEB DAVON
SYSTÈME DE GRUE DE STOCKAGE ET SON PROCÉDÉ DE FONCTIONNEMENT

(30) Priority: 01.10.2021 KR 20210130841
(43) Date of publication of application: 07.08.2024
(73) Proprietor: LG Energy Solution, Ltd., Seoul 07335 (KR)
(72) Inventor: YOOK, Jin Ho, Daejeon 34122 (KR)
(74) Representative: Goddar, Heinz J.
(86) International application number: PCT/KR2022/014468
(87) International publication number: WO 2023/055036

(56) References cited:
- JP-A- 2002 255 311
- JP-A- 2015 030 622
- JP-B2- 3 994 663
- KR-A- 20160 117 160
- KR-B1- 101 496 769
- US-A- 4 872 799
- US-A1- 2007 103 107
- US-A1- 2013 041 499
- US-A1- 2014 037 417

## Description

### [Technical Field]

### TECHNICAL FIELD

Embodiments disclosed herein relate to a stocker crane system and management thereof.

### [Background Art]

In the case of an automatic warehouse system that is expanded and applied in a logistics automation field, a stocker crane system is used to move an article or a workpiece to a rack for a freight shelf in a factory or a warehouse. For example, the stocker crane system may be used for a process of activating a secondary battery. First, a tray (or carriage) for an inspection target is loaded to an inspection position by a stocker crane, a charging/discharging device is connected to the inspection target, and then an activation process of charging/discharging a battery pack provided in the tray is performed. When the activation process is completed, the tray is unloaded by the stocker crane, and the above-mentioned processes are repeatedly performed until the activation process is completely performed on all the trays for the inspection targets. In this case, the stocker crane may have a structure capable of loading or unloading the plurality of trays and simultaneously move the plurality of trays, which makes it possible to improve efficiency.

JP 3994663 B is the most relevant document and discloses a stacker crane that includes a drive motor and a pair of rotary encoders-one mounted on the motor shaft (motor-side rotary encoder), and another on the crane body (vehicle-body-side rotary encoder). The motor-side encoder determines an inferred travel distance based on wheel rotation, while the vehicle-body-side encoder detects the actual position using a chain engaged with a sprocket. The system compares both distances to detect slippage. When deviations are detected, the controller automatically adjusts acceleration and deceleration to correct movement. The encoder mounted on the vehicle body is mechanically linked to a chain laid along the travel rail, which differs from a timing belt.

US 2007/103107 A1 discloses an encoder that determines the remaining travel distance of a stacker crane to perform deceleration control. When a linear sensor determines an absolute distance from the stop position, the linear sensor performs deceleration control, and when a mark sensor detects a mark, the mark sensor performs stop control. Likewise, deceleration control is performed based on the remaining elevation distance determined by an encoder. When a linear sensor determines an absolute distance from the stop position, the linear sensor performs deceleration control, and when the mark sensor detects the mark, the mark sensor performs stop control.

JP 2015-030622 A addresses the problem of how to provide a stacker crane capable of moving at high speed while suppressing vibration. As a solution, it is suggested: A stacker crane controls the position of a travelling truck according to a position command value Xref. A motor encoder monitors a motor and generates a first position detection value Xfb indicating the present position of the travelling truck. A filter filters the position command value Xref. A position controller generates a speed command value Vcom so that an error between the filtered position command value Xref' and the first position detection value Xfb becomes zero. A speed controller generates a torque command value Tcom so that an error between the speed command value Vref and a speed detection value Vfb, indicating the present speed of the travelling truck acquired using the motor encoder, becomes zero. A drive part drives the motor based on the torque command value

### [Disclosure]

### [Technical Problem]

When a motor operates to operate a wheel of the stocker crane, the stocker crane system may identify a position of the stocker crane by using a motor encoder attached to a motor and an external encoder disposed outside the motor. For example, the external encoder is connected to a pulley and rotates by means of a timing belt, and the stocker crane system may identify a rotation value of the external encoder. In addition, the stocker crane system may identify a rotation value of the motor encoder. However, in the case of the external encoder, the accuracy of the rotation value may deteriorate because of elastic deformation of a spring of the pulley. In the case of the motor encoder, the accuracy of the rotation value may deteriorate because of a slip of the wheel.

### [Technical Solution]

The invention is defined by the subject matter of the independent claims. Advantageous embodiments of the invention are subject to the dependent claims and are outlined herein below.

### [Advantageous Effects]

The stocker crane system according to the embodiment disclosed in the present document may accurately determine the movement and stop positions of the stocker crane and control an error or deviation.

The stocker crane system according to the embodiment disclosed in the present document may prevent a collision with the stopper.

### [Description of Drawings]

FIG. 1 is a view illustrating a stocker crane system according to various embodiments.
FIG. 2 is a block diagram of the stocker crane according to various embodiments.
FIG. 3 is a view illustrating an example of a structure of the stocker crane and a structure of an external encoder.
FIG. 4 is an operational flowchart for controlling a drive motor according to various embodiments.
FIG. 5 is a view illustrating an operation pattern according to various embodiments.
FIG. 6 is an operational flowchart for controlling the drive motor according to various embodiments.
FIG. 7 is an operational flowchart for controlling the drive motor according to various embodiments.

### [Mode for Invention]

Hereinafter, various embodiments disclosed in the present document will be described in detail with reference to the accompanying drawings. In the drawings of the present document, the same constituent elements will be designated by the same reference numerals, and the repetitive description of the same constituent elements will be omitted.

Specific structural or functional descriptions of various embodiments disclosed in the present document are exemplified only for the purpose of explaining the embodiments, the embodiments disclosed in the present document may be carried out in various forms, and it should not be interpreted that the present document is limited to the embodiments described in the present document.

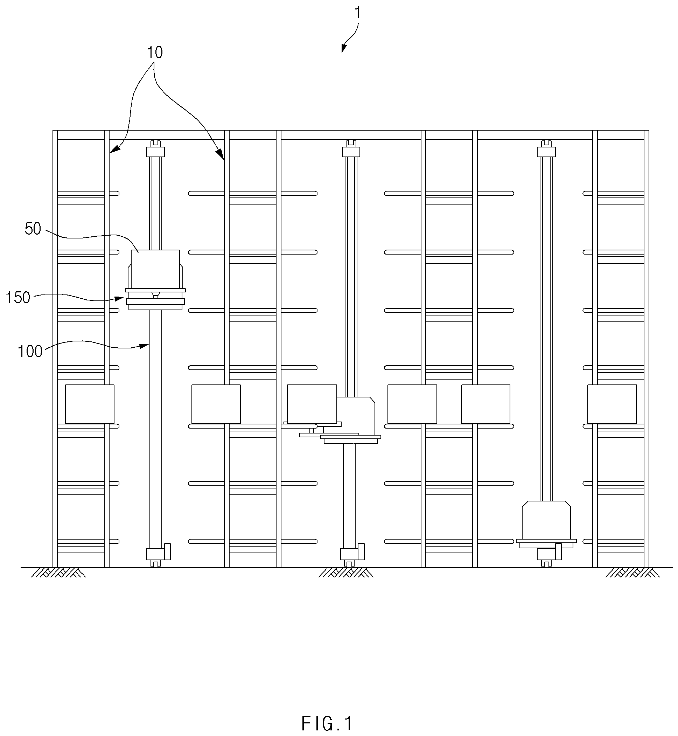

FIG. 1 is a view illustrating a stocker crane system 1 according to various embodiments. The stocker crane system 1 illustrated in FIG. 1 is provided for illustration only. The positions and shapes of the components are not limited to the example illustrated in FIG. 1.

Referring to FIG. 1, the stocker crane system 1 may include stocker cranes 100 configured to load articles 50 on racks 10 or unload the articles 50 from the racks 10. For example, the stocker crane 100 may place the article 50 on a carriage 150 and be positioned on a designated rack 10 by moving upward, downward, leftward, and rightward. The stocker crane 100 may use a fork and place the article 50 on the designated rack 10. On the same principle, the stocker crane 100 may use the fork and unload the article 50 placed on the rack 10.

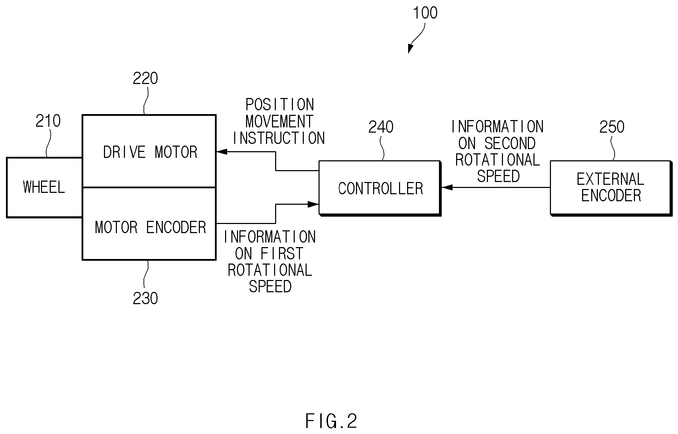

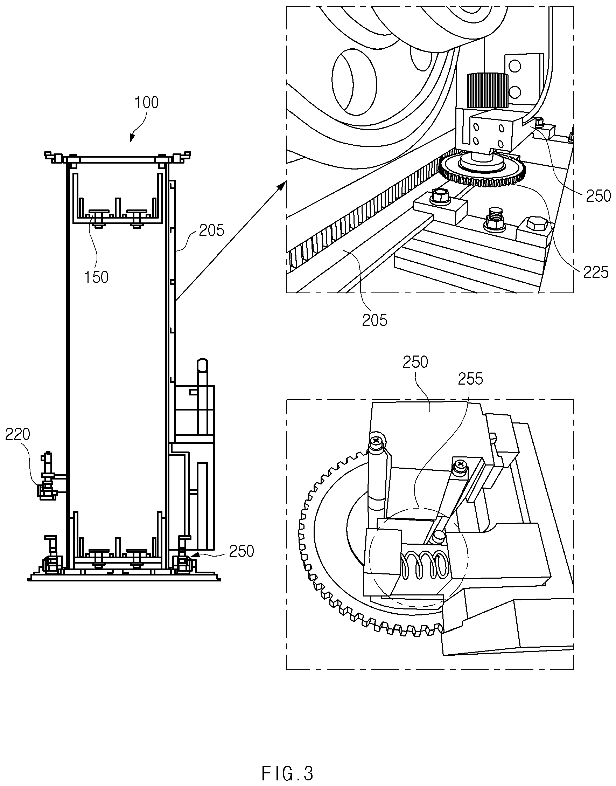

FIG. 2 is a block diagram of the stocker crane 100 according to various embodiments, and FIG. 3 is a view illustrating an example of a structure of the stocker crane 100 and a structure of the external encoder 250.

A drive motor 220 operates a wheel 210 of the stocker crane 100 and moves the stocker crane 100 or a component of the stocker crane 100. For example, as illustrated in FIG. 3, the drive motor 220 may operate to move the carriage 150 upward or downward. As another example, the stocker crane 100 may move on a flat rail in a designated direction by driving the wheel 210. For example, the drive motor 220 may be a servo motor.

The motor encoder 230 is connected to the drive motor 220 to measure a rotational speed of the drive motor 220 or the wheel 210. For example, when the drive motor 220 operates the wheel 210 in response to a position movement instruction of the controller 240, the motor encoder 230 may measure the rotational speed of the drive motor 220 or the wheel 210 and transmit information on a measured first rotational speed to the controller 240.

The rotational speed measured by the motor encoder 230 may have an error caused by a slip of the wheel 210 or a problem with the resolution of the motor encoder 230. Therefore, to increase the positional accuracy, the stocker crane 100 additionally uses the external encoder 250. The external encoder 250 may be disposed outside the drive motor 220 and measure the position of the stocker crane 100. For example, referring to FIG. 3, the external encoder 250 may be connected to the pulley 225. When the timing belt 205 and the pulley 225 engage with each other, the pulley 225 rotates while being connected to the timing belt 205. The external encoder 250 determines the position of the stocker crane 100 (i.e., the movement position of the timing belt 205) on the basis of the rotation of the pulley 225. The external encoder 250 may transmit the information on a second rotational speed, which is measured by means of the pulley 225, to the controller 240. In this case, the external encoder 250 may include an elastic member 255 (e.g., a spring) having predetermined elasticity so that the engagement between the pulley 225 and the timing belt 205 may be accurately implemented. In the embodiment, the stocker crane 100 may use the information on the second rotational speed accessorily in addition to the information on the first rotational speed or use the information on the second rotational speed independently of the information on the first rotational speed.

For example, the controller 240 may include a servo driver or a servo amplifier. The controller 240 may be supplied power to rotate the drive motor 220. The controller 240 may adjust the rotation of the drive motor 220 by performing frequency modulation while serving as a converter or an inverter. The controller 240 is connected to the respective components of the stocker crane 100 and controls an overall operation of the stocker crane 100. For example, the controller 240 transmits a movement instruction to the drive motor 220. In this case, the movement instruction may indicate a designated rotational speed. The drive motor 220 operates the wheel 210 in response to the movement instruction. When the stocker crane 100 moves, the controller 240 identifies a command position based on the information on the first rotational speed received from the motor encoder 230 and identifies a movement position based on the information on the second rotational speed received from the external encoder 250. The 'command position' means a position of the stocker crane 100 that is determined on the basis of the rotational speed of the drive motor 220. The 'movement position' means a position of the stocker crane 100 that is determined on the basis of the position of the timing belt 205.

In the case of the movement position identified by means of the external encoder 250, the pulley 225 and the timing belt 205 may be separated or loosened because of elastic deformation of the elastic member 255. A collision accident may occur when an actual traveling position of the stocker crane 100 cannot be accurately calculated because of an error of the command position or the movement position. The controller 240 according to the embodiments identifies a deviation between the command position and the movement position and control the drive motor 220 to minimize the deviation. According to embodiments of the invention, the controller 240 controls an operation (e.g. the rotational speed) of the drive motor 220 on the basis of one of the command position and the movement position.

In addition, the controller 240 further controls the drive motor 220 in consideration of a deviation between a current operation pattern determined on the basis of at least one of the command position or the movement position and a predicted operation pattern determined on the basis of repeated tests.

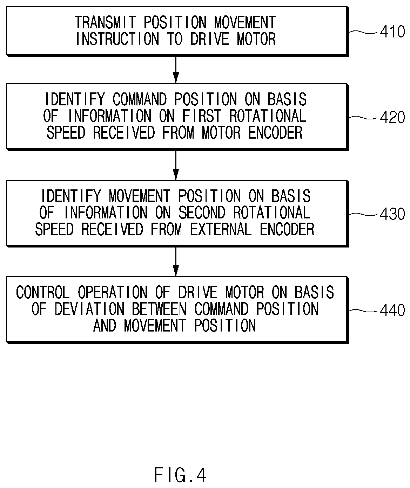

FIG. 4 is an operational flowchart for controlling the drive motor according to various embodiments. The operations described in the operational flowchart may be implemented by the stocker crane 100 or the constituent elements (e.g., the controller 240) of the stocker crane 100.

Referring to FIG. 4, in operation 410, the stocker crane 100 transmits a position movement instruction to the drive motor 220.

In operation 420, the stocker crane 100 identifies the command position based on the information on the first rotational speed received from the motor encoder 230.

In operation 430, the stocker crane 100 identifies the movement position based on the information on the second rotational speed received from the external encoder 250.

In operation 440, the stocker crane 100 controls the operation of the drive motor 220 on the basis of the deviation between the command position and the movement position. For example, the stocker crane 100 may adjust the rotational speed of the drive motor 220 to reduce the deviation between the command position and the movement position. As an example, when the deviation between the command position and the movement position is equal to or higher than (or exceeds) a designated critical value, the stocker crane 100 may stop the operation of the drive motor 220.

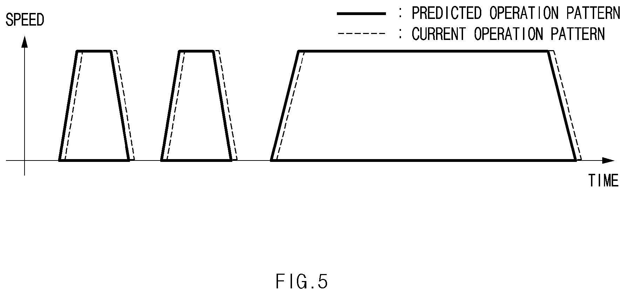

FIG. 5 is a view illustrating an operation pattern according to various embodiments.

Referring to FIG. 5, the graph illustrates an operation pattern of the stocker crane 100 with respect to the time (horizontal axis). The graph illustrated in FIG. 5 shows a speed over time, whereas the operation pattern may indicate the movement distance or acceleration. The stocker crane 100 may determine the operation pattern on the basis of at least one of the command position and the movement position. The predicted operation pattern may be a value predetermined by the repeated tests, and the predicted operation pattern may be stored as table information. When an error occurs on the command position or the movement position, a deviation occurs between the current operation pattern and the predicted operation pattern. The stocker crane 100 (or the controller 240) may stop the operation of the stocker crane 100 in order to ensure safety when the deviation between the current operation pattern and the predicted operation pattern is equal to or higher than (or exceeds) a designated critical value.

The deviation between the current operation pattern and the predicted operation pattern may be changed depending on the movement distance of the stocker crane 100. The deviation may become a maximum deviation when the stocker crane 100 moves a longest distance. Therefore, the stocker crane 100 may determine in advance a maximum deviation (i.e., a value made when the deviation is a maximum deviation) on the basis of the test. When the deviation between the current operation pattern and the predicted operation pattern is the maximum deviation, the controller may stop the operation of the stocker crane. On the same principle, the stocker crane 100 may determine in advance the maximum deviation between the command position and the movement position on the basis of the test. When the currently calculated deviation is the maximum deviation, the controller may stop the operation of the stocker crane.

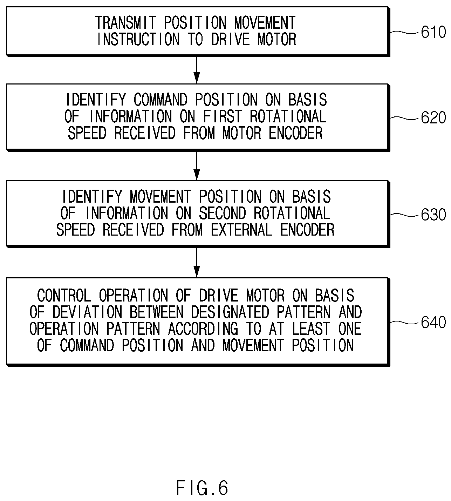

FIG. 6 is an operational flowchart for controlling the drive motor according to various embodiments. Because operations 610 to 630 illustrated in FIG. 6 are identical to operations 510 to 530 illustrated in FIG. 5, a description thereof will be omitted.

In operation 640, the stocker crane 100 may control the operation of the drive motor 220 on the basis of a deviation between a designated pattern and an operation pattern (i.e., a current operation pattern) according to at least one of the command position and the movement position. For example, the stocker crane 100 may stop the operation of the drive motor 220 when the deviation between the current operation pattern and the designated pattern is equal to or higher than the critical value (e.g., the maximum deviation). As another example, the stocker crane 100 may control the rotational speed of the drive motor 220 to reduce the deviation between the current operation pattern and the designated pattern.

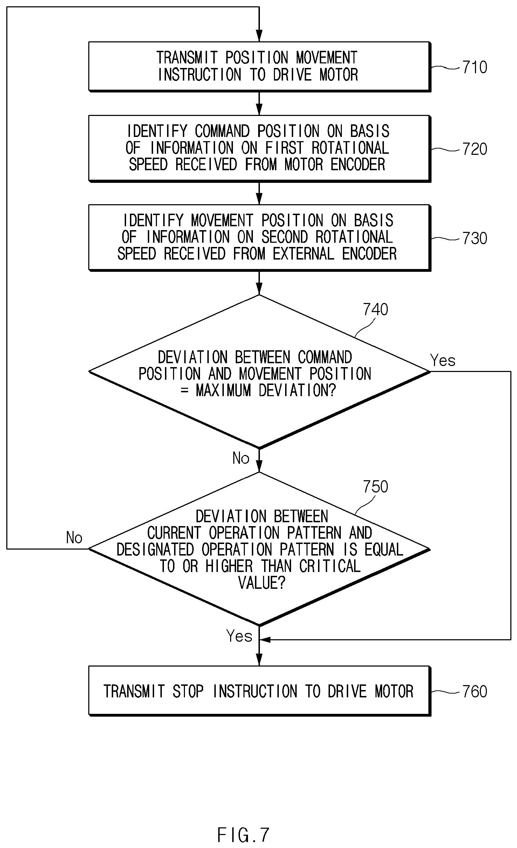

FIG. 7 is an operational flowchart for controlling the drive motor according to various embodiments. Because operations 710 to 730 illustrated in FIG. 7 are identical to operations 510 to 530 illustrated in FIG. 5, a description thereof will be omitted.

In operation 740, the stocker crane 100 may identify whether the deviation between the command position and the movement position is the maximum deviation (or the critical value). When the deviation reaches the maximum deviation, the controller 240 may transmit a stop instruction to the drive motor 220 in operation 760.

When the deviation is equal to or lower than the maximum deviation, the stocker crane 100, in operation 750, may identify whether the deviation between the current operation pattern and the designated operation pattern is equal to or higher than the critical value (e.g., the maximum deviation). The critical value, which is used to compare the operation patterns, may be a value identical to different from the critical value that is used to analyze the deviation between the command position and the movement position. When the deviation is equal to or higher than the critical value, the controller 240 may transmit a stop instruction to the drive motor 220 in operation 760. When the deviation is equal to or lower than the critical value, the stocker crane 100 may repeat operations 710 to 750.

## Claims

1. A stocker crane (100) comprising:
a drive motor (220) configured to operate a wheel (210) of the stocker crane (100);
a motor encoder (230) connected to the drive motor (220), wherein the motor encoder (230) is configured to determine a first rotational speed based on the rotational speed of the drive motor (220) or the wheel (210);
an external encoder (250) connected to a timing belt (205) of the stocker crane (100), wherein the timing belt (205) is engaged with a pulley (225) of the stocker crane (100) and the external encoder (250) is configured to determine a second rotational speed based on the rotation of the pulley (225); and
a controller (240) connected to the drive motor (220), the motor encoder (230), and the external encoder (250),
wherein the controller (240) is configured to:
instruct the drive motor (220) to move a position of the stocker crane (100);
identify a command position of the stocker crane (100) based on information on the first rotational speed received from the motor encoder (230);
identify a movement position of the stocker crane (100) based on information on the second rotational speed received from the external encoder (250); and
control an operation of the drive motor (220) based on a deviation between the command position and the movement position and a deviation between a predicted operation pattern of the stocker crane (100) determined on the basis of repeated tests and a current operation pattern of the stocker crane (100) that is determined based on the command position or the movement position,
wherein the current operation pattern and the predicted operation pattern each indicate at least one of a movement distance, time, speed, or acceleration of the stocker crane (100).

2. The stocker crane (100) of claim 1, wherein the controller (240) is configured to stop the operation of the drive motor (220) when a deviation between the current operation pattern of the stocker crane (100) and the predicted operation pattern is equal to or higher than a first critical value or a deviation between the first position and the second position is equal to or higher than a maximum deviation.

3. The stocker crane (100) of claim 1 or 2, wherein the current operation pattern and the predicted operation pattern each further indicate a time, speed, or acceleration according to a maximum movement distance of the stocker crane (100).

4. A method of operating a stocker crane (100), the method comprising:
instructing a drive motor (220) to move a position of the stocker crane (100);
identifying a command position of the stocker crane (100) based on information on a first rotational speed received from a motor encoder (230), wherein the first rotational speed is determined based on the rotational speed of the drive motor (220) or a wheel (210) that is operated by the drive motor (220);
identifying a movement position of the stocker crane (100) based on information on a second rotational speed received from an external encoder (250), wherein the second rotational speed is determined based on a rotation of a pulley (225) of the stocker crane (100) that is engaged with a timing belt (205) of the stocker crane (100); and
controlling an operation of the drive motor (220) based on a deviation between the command position and the movement position and a deviation between a predicted operation pattern of the stocker crane (100) determined on the basis of repeated tests and a current operation pattern of the stocker crane (100) that is determined according to the command position or the movement position;
wherein the current operation pattern and the predicted operation pattern each indicate at least one of a movement distance, time, speed, or acceleration of the stocker crane (100).

5. The method of claim 4, wherein the controlling of the operation of the drive motor (220) comprises stopping the operation of the drive motor (220) when a deviation between the current operation pattern and the predicted operation pattern is equal to or higher than a first critical value or a deviation between the first position and the second position is equal to or higher than a maximum deviation.

6. The method of claim 4 or 5, wherein the current operation pattern and the predicted operation pattern each further indicate a time, speed, or acceleration according to a maximum movement distance of the stocker crane (100).

## Patentansprüche

1. Lagerkran (100), umfassend:
einen Antriebsmotor (220), der konfiguriert ist, um ein Rad (210) des Lagerkrans (100) zu betreiben;
einen Motorencoder (230), der mit dem Antriebsmotor (220) verbunden ist, wobei der Motorencoder (230) konfiguriert ist, um eine erste Drehzahl basierend auf der Drehzahl des Antriebsmotors (220) oder des Rads (210) zu bestimmen;
einen externen Encoder (250), der mit einem Steuerriemen (205) des Lagerkrans (100) verbunden ist, wobei der Steuerriemen (205) mit einer Riemenscheibe (225) des Lagerkrans (100) in Eingriff steht und der externe Encoder (250) konfiguriert ist, um eine zweite Drehzahl basierend auf der Drehung der Riemenscheibe (225) zu bestimmen; und
eine Steuerung (240), die mit dem Antriebsmotor (220), dem Motorencoder (230) und dem externen Encoder (250) verbunden ist,
wobei die Steuerung (240) konfiguriert ist, um:
den Antriebsmotor (220) anzuweisen, eine Position des Lagerkrans (100) zu bewegen;
eine Befehlsposition des Lagerkrans (100) basierend auf Informationen über die erste Drehzahl, die von dem Motorencoder (230) empfangen werden, zu identifizieren;
eine Bewegungsposition des Lagerkrans (100) basierend auf Informationen über die zweite Drehzahl, die von dem externen Encoder (250) empfangen werden, zu identifizieren; und
einen Betrieb des Antriebsmotors (220) basierend auf einer Abweichung zwischen der Befehlsposition und der Bewegungsposition und einer Abweichung zwischen einem vorhergesagten Betriebsmuster des Lagerkrans (100), das basierend auf wiederholten Tests bestimmt wird, und einem aktuellen Betriebsmuster des Lagerkrans (100), das basierend auf der Befehlsposition oder der Bewegungsposition bestimmt wird, zu steuern,
wobei das aktuelle Betriebsmuster und das vorhergesagte Betriebsmuster jeweils mindestens eines von einer Bewegungsdistanz, Zeit, Geschwindigkeit oder Beschleunigung des Lagerkrans (100) angeben.

2. Lagerkran (100) nach Anspruch 1, wobei die Steuerung (240) konfiguriert ist, um den Betrieb des Antriebsmotors (220) zu stoppen, wenn eine Abweichung zwischen dem aktuellen Betriebsmuster des Lagerkrans (100) und dem vorhergesagten Betriebsmuster gleich oder höher als ein erster kritischer Wert ist oder eine Abweichung zwischen der Befehlsposition und der Bewegungsposition gleich oder höher als eine maximale Abweichung ist.

3. Lagerkran (100) nach Anspruch 1 oder 2, wobei das aktuelle Betriebsmuster und das vorhergesagte Betriebsmuster jeweils ferner eine Zeit, Geschwindigkeit oder Beschleunigung gemäß einer maximalen Bewegungsdistanz des Lagerkrans (100) angeben.

4. Verfahren zum Betreiben eines Lagerkrans (100), wobei das Verfahren umfasst:
Anweisen eines Antriebsmotors (220), eine Position des Lagerkrans (100) zu bewegen;
Identifizieren einer Befehlsposition des Lagerkrans (100) basierend auf Informationen über eine erste Drehzahl, die von einem Motorencoder (230) empfangen werden, wobei die erste Drehzahl basierend auf der Drehzahl des Antriebsmotors (220) oder eines Rads (210), das durch den Antriebsmotor (220) betrieben wird, bestimmt wird;
Identifizieren einer Bewegungsposition des Lagerkrans (100) basierend auf Informationen über eine zweite Drehzahl, die von einem externen Encoder (250) empfangen werden, wobei die zweite Drehzahl basierend auf einer Drehung einer Riemenscheibe (225) des Lagerkrans (100), die mit einem Steuerriemen (205) des Lagerkrans (100) in Eingriff steht, bestimmt wird; und
Steuern eines Betriebs des Antriebsmotors (220) basierend auf einer Abweichung zwischen der Befehlsposition und der Bewegungsposition und einer Abweichung zwischen einem vorhergesagten Betriebsmuster des Lagerkrans (100), das basierend auf wiederholten Tests bestimmt wird, und einem aktuellen Betriebsmuster des Lagerkrans (100), das gemäß der Befehlsposition oder der Bewegungsposition bestimmt wird;
wobei das aktuelle Betriebsmuster und das vorhergesagte Betriebsmuster jeweils mindestens eines von einer Bewegungsdistanz, Zeit, Geschwindigkeit oder Beschleunigung des Lagerkrans (100) angeben.

5. Verfahren nach Anspruch 4, wobei das Steuern des Betriebs des Antriebsmotors (220) das Stoppen des Betriebs des Antriebsmotors (220) umfasst, wenn eine Abweichung zwischen dem aktuellen Betriebsmuster und dem vorhergesagten Betriebsmuster gleich oder höher als ein erster kritischer Wert ist oder eine Abweichung zwischen der Befehlsposition und der Bewegungsposition gleich oder höher als eine maximale Abweichung ist.

6. Verfahren nach Anspruch 4 oder 5, wobei das aktuelle Betriebsmuster und das vorhergesagte Betriebsmuster jeweils ferner eine Zeit, Geschwindigkeit oder Beschleunigung gemäß einer maximalen Bewegungsdistanz des Lagerkrans (100) angeben.

## Revendications

1. Grue de stockage (100) comprenant :
un moteur d'entraînement (220) configuré pour actionner une roue (210) de la grue de stockage (100) ;
un codeur de moteur (230) connecté au moteur d'entraînement (220), le codeur de moteur (230) étant configuré pour déterminer une première vitesse de rotation sur la base de la vitesse de rotation du moteur d'entraînement (220) ou de la roue (210) ;
un codeur externe (250) connecté à une courroie de distribution (205) de la grue de stockage (100), la courroie de distribution (205) étant en prise avec une poulie (225) de la grue de stockage (100) et le codeur externe (250) étant configuré pour déterminer une deuxième vitesse de rotation sur la base de la rotation de la poulie (225) ; et
un organe de commande (240) connecté au moteur d'entraînement (220), au codeur de moteur (230), et au codeur externe (250),
dans laquelle l'organe de commande (240) est configuré pour :
ordonner au moteur d'entraînement (220) de déplacer une position de la grue de stockage (100) ;
identifier une position de commande de la grue de stockage (100) sur la base d'informations relatives à la première vitesse de rotation reçues à partir du codeur de moteur (230) ;
identifier une position de mouvement de la grue de stockage (100) sur la base d'informations relatives à la deuxième vitesse de rotation reçues à partir du codeur externe (250) ; et
contrôler un fonctionnement du moteur d'entraînement (220) sur la base d'un écart entre la position de commande et la position de mouvement et un écart entre un schéma de fonctionnement prévu de la grue de stockage (100) déterminé sur la base d'essais répétés et un schéma de fonctionnement actuel de la grue de stockage (100) qui est déterminé sur la base de la position de commande ou de la position de mouvement,
dans laquelle le schéma de fonctionnement actuel et le schéma de fonctionnement prévu indiquent chacun au moins un élément parmi une distance de mouvement, un temps, une vitesse, ou une accélération de la grue de stockage (100).

2. Grue de stockage (100) de la revendication 1, dans laquelle l'organe de commande (240) est configuré pour arrêter le fonctionnement du moteur d'entraînement (220) lorsqu'un écart entre le schéma de fonctionnement actuel de la grue de stockage (100) et le schéma de fonctionnement prévu est égal ou supérieur à une première valeur critique ou un écart entre la première position et la deuxième position est égal ou supérieur à un écart maximal.

3. Grue de stockage (100) de la revendication 1 ou 2, dans laquelle le schéma de fonctionnement actuel et le schéma de fonctionnement prévu indiquent chacun en outre un temps, une vitesse, ou une accélération en fonction d'une distance de mouvement maximale de la grue de stockage (100).

4. Procédé de fonctionnement d'une grue de stockage (100), le procédé comprenant :
le fait d'ordonner à un moteur d'entraînement (220) de déplacer une position de la grue de stockage (100) ;
le fait d'identifier une position de commande de la grue de stockage (100) sur la base d'informations relatives à une première vitesse de rotation reçues à partir d'un codeur de moteur (230), la première vitesse de rotation étant déterminée sur la base de la vitesse de rotation du moteur d'entraînement (220) ou d'une roue (210) qui est actionnée par le moteur d'entraînement (220) ;
le fait d'identifier une position de mouvement de la grue de stockage (100) sur la base d'informations relatives à une deuxième vitesse de rotation reçues à partir d'un codeur externe (250), la deuxième vitesse de rotation étant déterminée sur la base d'une rotation d'une poulie (225) de la grue de stockage (100) qui est en prise avec une courroie de distribution (205) de la grue de stockage (100) ; et
le fait de contrôler un fonctionnement du moteur d'entraînement (220) sur la base d'un écart entre la position de commande et la position de mouvement et un écart entre un schéma de fonctionnement prévu de la grue de stockage (100) déterminé sur la base d'essais répétés et un schéma de fonctionnement actuel de la grue de stockage (100) qui est déterminé en fonction de la position de commande ou de la position de mouvement ;
dans lequel le schéma de fonctionnement actuel et le schéma de fonctionnement prévu indiquent chacun au moins un élément parmi une distance de mouvement, un temps, une vitesse, ou une accélération de la grue de stockage (100).

5. Procédé de la revendication 4, dans lequel le fait de contrôler le fonctionnement du moteur d'entraînement (220) comprend le fait d'arrêter le fonctionnement du moteur d'entraînement (220) lorsqu'un écart entre le schéma de fonctionnement actuel et le schéma de fonctionnement prévu est égal ou supérieur à une première valeur critique ou un écart entre la première position et la deuxième position est égal ou supérieur à un écart maximal.

6. Procédé de la revendication 4 ou 5, dans lequel le schéma de fonctionnement actuel et le schéma de fonctionnement prévu indiquent chacun en outre un temps, une vitesse, ou une accélération en fonction d'une distance de mouvement maximale de la grue de stockage (100).
